(19) Europäisches Patentamt
European Patent Office
Office européen des brevets

(11) **EP 4 102 622 A1**

(12) **EUROPEAN PATENT APPLICATION**
published in accordance with Art. 153(4) EPC

(43) Date of publication:
**14.12.2022 Bulletin 2022/50**

(51) International Patent Classification (IPC):
**H01M 50/107** (2021.01)     **H01M 10/625** (2014.01)

(21) Application number: **21757504.2**

(52) Cooperative Patent Classification (CPC):
**H01M 10/625; H01M 10/658; H01M 50/103; H01M 50/107; H01M 50/131; H01M 50/249; H01M 50/258;** Y02E 60/10

(22) Date of filing: **07.02.2021**

(86) International application number:
**PCT/CN2021/075787**

(87) International publication number:
**WO 2021/164595 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.02.2020 CN 202010109071**

(71) Applicant: **BYD Company Limited
Shenzhen, Guangdong 518118 (CN)**

(72) Inventors:
• **YUAN, Wansong
Shenzhen, Guangdong 518118 (CN)**

• **ZOU, Xiangda
Shenzhen, Guangdong 518118 (CN)**
• **DENG, Dongjun
Shenzhen, Guangdong 518118 (CN)**
• **CHEN, Wenhui
Shenzhen, Guangdong 518118 (CN)**
• **ZHU, Yan
Shenzhen, Guangdong 518118 (CN)**

(74) Representative: **Hoffmann Eitle
Patent- und Rechtsanwälte PartmbB
Arabellastraße 30
81925 München (DE)**

(54) **BATTERY CASE, BATTERY, BATTERY PACK, BATTERY MODULE, AND VEHICLE**

(57)     A battery case (100) is provided, including a plurality of side plates. A first side plate (110) has the largest area among the plurality of side plates, and at least one first side plate (110) includes a first portion (111) and a second portion (112). The first portion (111) is a curved surface concave toward inside of the battery case (100). A three-dimensional coordinate system is established in a first direction, a second direction, and a third direction, and the second direction is perpendicular to the first side plate. A curvature of the first portion is less than a curvature of an ellipsoid, the curvature of the ellipsoid is obtained from an ellipsoid function, and the ellipsoid function is: $((x-a)/i)^2+((y-b)/j)^2+((z-c)/k)^2=1$, where, a, b, c, i, j, and k are determined according to coordinates of at least four points that are different from each other, and x, y, and z are coordinates of the three directions of the ellipsoid function.

FIG. 2

EP 4 102 622 A1

## Description

### CROSS-REFERENCE TO RELATED APPLICATIONS

The present disclosure claims priority to Chinese Patent Application No. 202010109071.0, entitled "BATTERY SEPARATOR, BATTERY, BATTERY MODULE, BATTERY PACK, AND VEHICLE" and filed by BYD Co., Ltd. on February 21, 2020.

### FIELD

The present disclosure relates to the field of batteries, and specifically to a battery case, a battery, a battery pack, a battery module, and a vehicle.

### BACKGROUND

With the increasing popularity of new energy vehicles, requirements for the use of power batteries in the new energy vehicles are becoming higher. For most of existing batteries, a square aluminum shell is used as an outer shell. For a battery with a square aluminum shell, an assembly gap is usually left between an electrode core and the aluminum shell for cycle performance of the battery, easy assembly into the shell, and no scratches on a separator. An excessively large gap not only causes insufficient space utilization and battery capacity waste, but also causes movement of the electrode core inside the battery, and gas evolution in a charging and discharging process causes a poor interface state. As a result, lithium ions cannot diffuse through the poor interface, thereby causing lithium plating, and affecting the safety and service life of the battery.

### SUMMARY

The present disclosure aims to resolve at least one of the technical problems existing in the related art. For this purpose, the present disclosure provides a battery case with a more proper structure, which can improve cycle life of a battery, simplify a module design, improve assembly efficiency, and avoid damage to an interface of the electrode piece.

A battery case is provided. The battery case includes a plurality of side plates, and the plurality of side plates include two first side plates that are oppositely arranged. Each of the two first side plates has the largest area among the plurality of side plates, at least one of the two first side plates includes a first portion and a second portion surrounding the first portion, and the first portion is a curved surface concave toward inside of the battery case. A three-dimensional coordinate system is established in a first direction, a second direction, and a third direction, where the second direction is perpendicular to the first side plate, a curvature of the first portion is less than a curvature of an ellipsoid, the curvature of the ellipsoid is obtained from an ellipsoid function, and the ellipsoid function is:

$$((x-a)/i)^2+((y-b)/j)^2+((z-c)/k)^2=1;$$

where, a, b, c, i, j, and k are determined according to coordinates of at least four points that are different from each other in the first portion, the first direction is an X direction in the three-dimensional coordinate system, the second direction is a Y direction in the three-dimensional coordinate system, the third direction is a Z direction in the three-dimensional coordinate system, and x, y, and z are coordinates of the three directions of the ellipsoid function.

Therefore, in the present disclosure, the first portion concave toward the inside of the battery case is arranged on the first side plate with the largest area of the battery case, which can improve a surface state of an electrode piece and improve the battery cycle life. In addition, a module design can be simplified, and when expanding, the first side plate of the battery case can occupy a space of a concave portion, thereby reducing a gap between batteries in a module. Controlling an expansion ratio based on ensuring the interface state of the electrode piece can improve assembly and production efficiency. The first portion with a curvature less than the curvature of the foregoing ellipsoid is used as an inwardly concave portion of the first side plate, so that two sides of the electrode core are evenly pressed to avoid damage to the interface of the electrode piece.

A battery is provided. The second direction is a thickness direction of the battery, and the battery includes the battery case according to any one of the above and a cover plate. The cover plate and the battery case are hermetically connected to jointly define a sealed accommodating chamber, and the battery further includes an electrode core sealed in the accommodating chamber.

A battery pack is provided, including a battery array. The battery array includes several batteries according to any one of the above; the several batteries are arranged in sequence along the second direction to form the battery array.

A battery module is provided. The battery module includes a plurality of batteries, and at least one of the plurality of batteries includes the battery case according to any one of the above and an electrode core arranged in the battery case.

A vehicle is provided, including the battery pack according to any one of the above or the battery module according to any one of the above.

Additional aspects and advantages of the present disclosure will be given in the following description, some of which will become apparent from the following description or may be learned from practices of the present disclosure.

## BRIEF DESCRIPTION OF THE DRAWINGS

The foregoing and/or additional aspects and advantages of the present disclosure will become apparent and comprehensible in the description of the embodiments made with reference to the following accompanying drawings.

FIG. 1 is a schematic three-dimensional diagram of a battery case according to an embodiment of the present disclosure.

FIG. 2 is a schematic three-dimensional diagram of a battery according to an embodiment of the present disclosure.

FIG. 3 is a cross-sectional view of a battery according to an embodiment of the present disclosure.

FIG. 4 is a schematic structural diagram of another battery according to an embodiment of the present disclosure.

FIG. 5 is a schematic three-dimensional diagram of a battery pack according to an embodiment of the present disclosure.

FIG. 6 is a schematic structural diagram of a battery module according to an embodiment of the present disclosure.

FIG. 7 is a schematic structural diagram of another battery module according to an embodiment of the present disclosure.

FIG. 8 is a schematic diagram of a vehicle according to an embodiment of the present disclosure.

## DETAILED DESCRIPTION

The following describes embodiments of the present disclosure in detail. Examples of the embodiments are shown in the accompanying drawings. The same or similar elements and elements having same or similar functions are denoted by same or similar reference numerals throughout the descriptions. The embodiments described below with reference to the accompanying drawings are exemplary and used only for explaining the present disclosure, and should not be construed as a limitation on the present disclosure.

In the description of the present disclosure, it should be understood that a direction or location relationship indicated by a term "center", "on", "under", "front", "rear", "left", "right", "vertical", "horizontal", "top", "bottom", "inner", "outer", or the like is a direction or location relationship shown based on the accompanying drawings, and is intended only conveniently describe the present disclosure and simplify the description, but is not intended to indicate or imply that a mentioned apparatus or element needs to have a particular direction or be constructed and operated in the particular direction. Therefore, the direction or location relationship cannot be understood as a limitation on the present disclosure.

It should be noted that, the terms "first" and "second" are used for descriptive purposes only and should not be construed as indicating or implying relative importance or implicitly indicating the number of technical features indicated. Therefore, features defining "first" and "second" may explicitly or implicitly include one or more such features. Further, in the description of the present disclosure, unless otherwise stated, "a plurality of" means two or more than two.

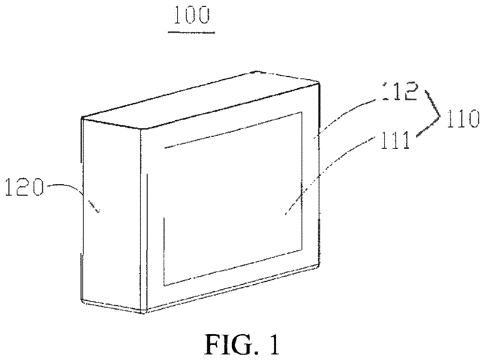

Referring to FIG. 1 to FIG. 3, an embodiment of the present disclosure provides a battery case 100. The battery case 100 includes a plurality of side plates, and the plurality of side plates include two first side plates 110 that are oppositely arranged. The first side plate 110 has the largest area among the plurality of side plates. The first side plate 110 includes a first portion 111 and a second portion 112 surrounding the first portion 111, and the first portion 111 is a curved surface concave toward inside of the battery case 100. A three-dimensional coordinate system is established in a first direction X, a second direction Y, and a third direction Z. The second direction Y is perpendicular to the first side plate 110. When the battery case 100 is mounted on a battery, the second direction Y is a thickness direction of the battery, the first direction X is a length direction of the battery, and the third direction Y is a height direction of the battery. The first direction X, the second direction Y, and the third direction Z are perpendicular to each other.

A curvature of an inwardly concave surface of the first portion 111 is less than a curvature of an ellipsoid, and the curvature of the ellipsoid is obtained from an ellipsoid function. The ellipsoid function is:

$$((x-a)/i)^2+((y-b)/j)^2+((z-c)/k)^2=1,$$

where, a, b, c, i, j, and k are determined according to coordinates of at least four points that are different from each other in the first portion 111, the first direction X is an X direction in the three-dimensional coordinate system, the second direction Y is a Y direction in the three-dimensional coordinate system, the third direction Z is a Z direction in the three-dimensional coordinate system, and x, y, and z are coordinates of the three directions of the ellipsoid function. The at least four points that are different from each other may be arbitrarily obtained on the first portion 111.

The ellipsoid is a curved surface concave toward the inside of the battery case 100 to a greatest extent, and that the curvature of the first portion 111 is less than the curvature of the ellipsoid means that an extent to which the first portion 111 is concave toward the inside of the battery case 100 is less than a concave extent of the ellipsoid.

Battery thickness changes are classified into two types including a reversible change and an irreversible change. The reversible change includes thermal expansion and a volume change caused by lithium intercalation and deintercalation. The original thickness can be restored under a same SOC, and the foregoing process does not cause irreversible damage to the battery. The reversible expansion of the battery usually reflects characteristics of positive and negative materials, and an expansion ratio can be reduced by optimizing a material system. The irreversible change mainly refers to the increase in the thickness of the battery under the same SOC after the battery is charged and discharged. The irreversible expansion, caused by SEI film growth, lithium plating, gas evolution, mechanical relaxation, or the like, has a permanent effect on the battery.

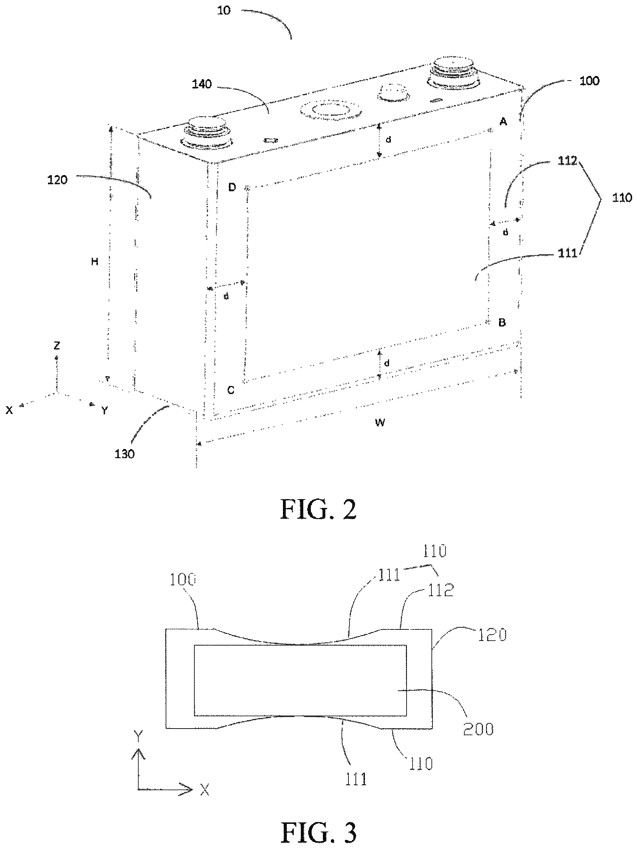

A stamped-type single-sided open aluminum shell is generally selected as an aluminum shell of a lithium-ion battery. A conventional aluminum shell design reserves cycle and assembly margins for an electrode core. An excessive gap causes some large bubbles between electrode pieces when an active material reacts. A transport path of lithium ions is separated by the large bubbles, which makes it difficult to insert the lithium ions into a negative electrode, causing the problem of lithium plating. To ensure that the electrode piece has a good interface state during the whole life cycle of the battery, in the present disclosure, an inwardly concave portion (that is, the first portion 111) is arranged on the first side plate 110 with the largest area of the battery case 100. A conventional stamped aluminum shell is processed into the battery case 100 whose first side plate 110 has an inwardly concave curved surface by using a shaping tool (jig or die), and the curvature of the first portion 111 is made less than the curvature of the ellipsoid. After an electrode core 200 is assembled in the battery case 100, the inwardly concave first portion 111 is pressed against the electrode core 200 (see FIG. 3), and in this case, the gas is extracted by the negative pressure during formation and nail sealing, to prevent the battery case 100 (aluminum shell) from being expanded due to the formation and the gas evolution. Therefore, the electrode core 200 that is closely attached does not have an excessive gap in a cycle process, which may cause a poor interface of the electrode piece. Compared with the conventional aluminum shell, the inwardly concave aluminum shell design can reduce a pressure of a negative pressure process and prevent an electrolyte solution from being drawn out due to an excessive air pressure.

In the present disclosure, the first portion 111 concave toward the inside of the battery case 100 is provided on the first side plate 110 with the largest area of the battery case 100, which can improve a surface state of the electrode piece and improve the cycle life of the battery, In addition, a module design can be simplified, and when expanding, the first side plate 110 of the battery case 100 can occupy a space of a concave portion, thereby reducing a gap design between batteries in the module. Controlling an expansion ratio based on ensuring the interface state of the electrode piece can improve assembly and production efficiency. The first portion 111 with a curvature less than the curvature of the foregoing ellipsoid is used as the inwardly concave portion of the first side plate 110, so that two sides of the electrode core are evenly pressed to avoid damage to the interface of the electrode piece.

According to an embodiment of the present disclosure, when two of i, j, and k are equal, a, b, c, i, j, and k are determined according to coordinates of five points that are different from each other in the first portion.

When the first side plate 110 is closer to a square, the first portion 111 is closer to a sphere, an orthographic projection of the first portion 111 in the second direction is closer to a square, the ellipsoid function is closer to a spherical function.

When i, j, and k are equal, the ellipsoid is a sphere, and the ellipsoid function is:

$$(x-a)^2+(y-b)^2+(z-c)^2=R^2,$$

where, a, b, c, and R are determined according to coordinates of four points that are different from each other in the first portion.

In some embodiments, a length of the first side plate 110 in the third direction Z is H, and a length of the first side plate 110 in the first direction X is W. A distance between an edge of the first portion 111 and an edge of the first side plate 110 is d, and the edge of the first portion 111 includes a first point A, a second point B, a third point C, and a fourth point D. In the three-dimensional coordinate system, a coordinate of the first point is A (0 mm, 0 mm, 0 mm), that is, A is the origin of the three-dimensional coordinate system, a coordinate of the second point is B (0 mm, 0 mm, (-H+2d) mm), a coordinate of the third point is C ((-W+2d) mm, 0 mm, (-H+2d) mm), and a coordinate of the fourth point is D ((-W+2d) mm, 0 mm, 0 mm), where, a, b, c, and R are determined according to the coordinates of the first point, the second point, the third point, and the fourth point.

According to the coordinates of the first point A, the second point B, the third point C, and the fourth point D, it can be learned that the four points form a rectangle when being connected. When the first side plate 110 is a rectangle, an orthographic projection of the first portion 111 on a plane defined by the first direction and the third direction is a rectangle or a square. When the first side plate 110 is a square, the orthographic projection of the first portion 111 on the plane defined by the first direction and the third direction is a square. In the present disclosure, the first point A, the second point B, the third point C, and the fourth point D are four vertices of the first portion 111. It should be noted that when the origin of the three-dimensional coordinate system moves to another position, coordinates of the four vertices of the first portion 111 change correspondingly. In other embodiments, four other points may alternatively be used to determine the values of a, b, c, and R. In other embodiments, shapes of the first side plate 110 and the orthographic projection of the first portion 111 on the plane defined by the first direction and the third direction may alternatively be a square, a circle, or another irregular shape.

In some embodiments, the distance between the edge of the first portion 111 and the edge of the first side plate 110 is d, and d=5 to 20 mm. When the length and the width of the first side plate 110 are fixed, a smaller value of the distance d indicates a larger area of the first side plate 110 occupied by the first portion 111, and a larger value of the distance d indicates a smaller area of the first side plate 110 occupied by the first portion 111. For the same battery, if an expansion region of the electrode core increases in size, the smaller value of the distance d is taken.

In some embodiments, a difference between curvatures of upper and lower surfaces of the first portion 111 is less than 5%. Therefore, upper and lower forces on the first portion 111 are more even, and a force of pressing the electrode core is more even, to avoid damage to the interface.

In some embodiments, that is, curvatures of the first portions 111 of the two first side plates 110 that are oppositely arranged may be different, but a difference between the curvatures of the first portions is less than 5%.

The curvatures of the first portions 111 of the two first side plates 110 may be the same, that is, the first portions 111 of the two first side plates 110 have the same spherical function. The difference between the curvatures of the first portions 111 of the two first side plates 110 is smaller, and the forces of pressing two sides of the electrode core 200 are more uniform when the battery case 100 is evacuated, thereby avoiding an uneven interface of the electrode piece.

In some embodiments, an orthographic projection of the first portion 111 on the plane defined by the first direction and the third direction is one of a square, a rectangle, a circle, or an irregular figure.

In some embodiments, the side plate and a bottom plate are 3 series aluminum shells. To lastingly ensure the quality of the interface, rigidity of the aluminum shell should not be too strong, thus when the electrode core expanding, the aluminum shell can be expanded under expanding force of the core, excessive press and lithium plating in the electrode core is avoided; during shrinking, the aluminum shell can be resilient. Therefore, the side plate in the present disclosure is made of the 3 series aluminum shell with strength and ductility up to the standard.

In some embodiments, the plurality of side plates further include two second side plates 120 that are oppositely arranged, and the battery case 100 is defined by the first side plates 110 and the second side plates 120. The second side plate 120 is perpendicular to the first side plate 110.

In some embodiments, the battery case 110 further includes a bottom plate 130. The bottom plate 130 is connected to one side of the two first side plates 110 and the two second side plates 120. The bottom plate 130, the first side plates 110, and the second side plates 120 are integrally formed and fixed or separately formed and connected and fixed.

Referring to FIG. 2 again, an embodiment of the present disclosure further provides a battery 10, and the second direction Y is a thickness direction of the battery 10. The battery includes the battery case 100 according to any one of the above and a cover plate 140. The cover plate 140 and the battery case 110 are hermetically connected to jointly define a sealed accommodating chamber, and the battery 10 further includes an electrode core 200 (as shown in FIG. 3) sealed in the battery case 110.

In some embodiments, an air pressure of the accommodating chamber is lower than an air pressure outside the battery case 100. That is, an accommodating space defined by the battery case 100 and the cover plate 140 is in a negative pressure state. In the present disclosure, "air pressure" is an abbreviation for atmospheric pressure, and is the force of the atmosphere acting on a unit area, that is, equal to a weight of a vertical air column extending upward to the upper boundary of the atmosphere on a unit area.

In some embodiments, the air pressure of the accommodating chamber is -100 kPa to -5 kPa. In some other embodiments, the air pressure of the accommodating chamber is -90 kPa to -10 kPa. Further, the air pressure of the accommodating chamber is -50 kPa to -20 kPa. Of course, those skilled in the art may set the air pressure of the accommodating chamber according to actual needs.

In some embodiments, a thickness of each of the side plates of the battery case 100 is 0.05 mm to 1 mm. In the present disclosure, the thickness of the side plate of the battery case 100 is limited to a thickness within the foregoing range, which not only ensures the strength of the battery case 100, but also does not reduce the capacity of the battery 10.

In some embodiments, the first portions 111 of the two first side plates 110 that are oppositely arranged both abut against an outer surface of the electrode core 200 to clamp the electrode core 200 (as shown in FIG. 3). Curvatures of the first portions 111 of the two first side plates 110 are both less than a curvature of the ellipsoid represented by the foregoing ellipsoid function, or the curvature of the first portion 111 of only one of the first side plates 110 is less than the curvature of the ellipsoid represented by the foregoing ellipsoid function, but the other is another concave sphere.

The curvatures of the inwardly concave first portions 111 of the two first side plates 110 are the same, so that forces on two sides of the electrode core 200 are even, to prevent the interface of the electrode piece from being damaged.

When a gap between the battery case 100 and electrode cores 200 are relatively large, electrode cores 200 are likely to move in the battery case 100 when the battery 10 is vibrated or bumped, and relative displacement also occurs between electrode cores 200, thereby causing damage to the electrode cores 200, such as damage to a current collector, wrinkling of a separator, detachment of an active material layer of the electrode piece, and poor stability of the battery 10, and also easily causing safety problems, for example, a short circuit between positive and negative electrodes. In the present disclosure, the side plate with the largest area of the battery case 100 is inwardly concave, so that the gap between the side plate and the electrode cores 200 is reduced, and a space for the electrode cores 200 to move or be displaced from each other is reduced. Therefore, the movement of the electrode cores 200 and the relative displacement between the electrode cores 200 can be reduced, and the stability of the battery 10, the strength of the battery 10, and the safety performance of the battery 10 can be improved.

In addition, in some embodiments of the present disclosure, the largest surface of the battery 10 and the largest surface of an adjacent battery 10 are arranged face to face, that is, when the plurality of batteries 10 are arranged in sequence along the thickness direction, the batteries 10 are arranged "largest surface to largest surface". Further, the accommodating chamber defined by the battery case 100 and the cover plate 140 is in a negative pressure, and the largest surface of the battery case 100 is concave toward the inside of the battery case 100, that is, the foregoing concave curved first portion 111. During the normal use of the battery, the battery usually expands due to the expansion of the material, gas evolution of the electrolyte solution, or other reasons, and the region with the largest expansion and deformation is often on the largest surface of the battery. By using this technology, the largest surface is limited to a slightly inwardly concave condition by evacuating in the initial state of the battery, to effectively relieve the squeeze between the batteries after the battery expands, and improve the service life, safety, and other performance of the battery and the entire system.

Before the electrode core 200 is mounted in the battery case 100 of the present disclosure, the first portion 111 concave toward the inside of the battery case 100 is stretched toward the outside of the battery case 100. After the assembly is completed, the first portion 111 is pressed inward to be concave. After the assembly is completed, there is a gap between the battery case 100 and the electrode core 200.

In some embodiments, before the battery case 100 is evacuated, a gap is provided between the electrode core 200 and an inner surface of the battery case 100. After the battery case 100 is evacuated, the first portion 111 faces the electrode core and is pressed against an outer surface of the electrode core 200 to clamp the electrode core 200.

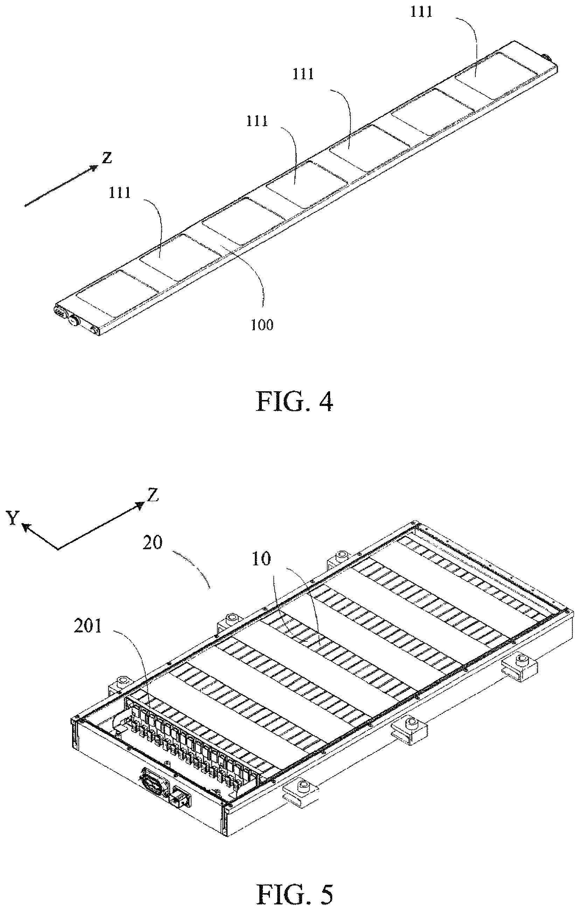

Referring to FIG. 4, in some embodiments, the battery includes a plurality of electrode cores 200, and the electrode cores 200 are arranged along the third direction Z, that is, the third direction Z is a length direction of the electrode cores 200. The first side plate 110 includes a plurality of first portions 111, and one first portion 111 and one electrode core 200 are arranged correspondingly. In this embodiment, the plurality of electrode cores 200 arranged in the third direction Z are connected in series. In other embodiments, a plurality of first portions 111 are arranged on each of the two first side plates 110 that are oppositely arranged, and the electrode core 200 is clamped by the first portions 111 on both sides.

Referring to FIG. 5, an embodiment of the present disclosure further provides a battery pack 20, including a battery array 201, and the battery array 201 includes several batteries 10 according to any one of the foregoing embodiments. The several batteries 10 are arranged in sequence along the second direction Y to form the battery array 201. In other words, the several batteries 10 are arranged into the battery array along a thickness direction of the batteries.

There may be one or more battery arrays 201, and there may be one or more batteries 10 in each battery array 201. In actual production, the quantity of batteries 10 can be set according to actual needs. The quantity of battery arrays 201 can also be set according to actual needs, and is not specifically limited in the present disclosure.

There is a gap between at least two adjacent batteries 10, and a ratio of the gap to a thickness of a single battery 10 (that is, each battery) is in a range of 0.001 to 0.15.

It should be noted that, the gap between two adjacent batteries 10 changes as working time of the battery 10 increases, but regardless of whether the battery is in operation or after operation or before the battery 10 is shipped from the factory, as long as the ratio of the gap between the batteries 10 to the thickness is within the range defined in the present disclosure, it falls within the protection scope of the present disclosure.

The area of the two first side plates 110 that are oppositely arranged in the thickness direction Y of the battery 10 is the largest, and because the first portion 111 is an inwardly concave curved surface, the area of the curved surface is larger than that of a plane, therefore, a surface area of the first side plate 110 further increases. Since a surface with a larger area is more likely to expand, a gap is reserved between the batteries 10, to reserve a buffer space for the expansion of the battery 10.

The expansion of the battery 10 is related to the thickness of the battery 10. If the thickness of the battery is larger, the battery 10 is more likely to expand. In the present disclosure, the ratio of the gap between the batteries 10 to the thickness of the battery 10 is limited to 0.001 to 0.15, to make full use of a space of the battery pack 20, improve utilization of the battery pack 20, and also play a better buffer effect on the expansion of the battery 10.

In addition, when the battery 10 expands, heat is generated, when the gap is reserved between the batteries 10, the gap can further serve as a heat dissipation channel, for example, an air channel, the surface with a larger area of the battery 10 has a better heat dissipation effect, therefore, the heat dissipation efficiency of the battery pack 20 can be further improved, to improve safety performance of the battery pack 20.

In the foregoing solution, the gap between the batteries 10 may be understood as that no structural member is arranged between the batteries 10 and a space is simply reserved, or may alternatively be understood as that the batteries 100 are provided with another structural member so that the battery 10 is separated from another battery 10 by the structural member.

It should be noted that, when the structural member is arranged between the batteries 10, the gap between the batteries 10 should be understood as a distance between the batteries 10 on both sides of the structural member, but not be understood as a distance between the structural member and the battery 10.

It should be noted that a gap may be reserved between the structural member and the batteries 10 on both sides of the structural member, the structural member may alternatively be in direct contact with the batteries 10 on both sides of the structural member. When the structural member is in direct contact with the batteries 10 arranged on both sides, the structural member should be flexible, to buffer the expansion of the battery 10. The structural member includes but is not limited to aerogel, heat conducting structural adhesive, or heat insulation foam.

In the present disclosure, when there are a plurality of battery arrays 201, the gap should refer to a distance between two adjacent batteries 10 in the same battery array 201 rather than a distance between two adjacent batteries in different battery arrays 201. In addition, in the same battery array 201, a gap may be reserved between all two adjacent batteries, or a gap may be reserved between part of two adjacent batteries.

In some embodiments, the gap between the two adjacent batteries 10 includes a first gap, the first gap is the minimum distance between two cover plates 140 of the two adjacent batteries along the second direction, and the thickness of the battery 10 is consistent with the size of the cover plate 140 in the second direction. A ratio of the first gap to the thickness of the battery is in a range of 0.005 to 0.1.

In the foregoing embodiment, due to a high strength of the cover plate 140, the cover plate 140 is less likely to expand compared with the battery case 100. Even if a chemical reaction occurs inside the battery 10 after operating for a period of time, the battery 10 expands and squeezes adjacent batteries 10, and the first gap changes (for example, gradually increases), however, the change is small and can be ignored, or even if the first gap changes, the ratio of the first gap to the thickness of the battery 10 still satisfies the foregoing range. In the foregoing embodiment, two ends of the battery case 100 are respectively provided with the cover plate 101 and the bottom plate 130, when the plurality of batteries 10 are arranged along the thickness direction into the battery array 201, the gap between the two adjacent batteries 10 refers to the minimum distance between two adjacent cover plates 101 arranged at the same end of the battery array 201.

In another embodiment, the battery case 100 has two first surfaces that are oppositely arranged along the second direction Y; the gap between the two adjacent batteries 10 includes a second gap, and the second gap is the minimum distance between two first surfaces facing each other of the battery cases 100 of the two adjacent batteries 10. The thickness of the battery 10 is consistent with the size of the cover plate 140 in the second direction, and a ratio of the second gap to the thickness of the battery 10 is in a range of 0.005 to 0.1. In the present disclosure, because the first side plate 110 of the battery case 100 has the inwardly concave first portion, the second gap between the two adjacent batteries 10 refers to the gap between the second portions 112 on the first side plates 110.

The second gap of the batteries 10 before use is greater than the second gap of the batteries 10 after use.

"Before use" may be understood as that before the battery 10 is to be shipped from the factory after the assembly is completed, or the battery has been shipped from the factory but has not started to provide power to the outside. "After use" may be understood as after the battery 10 supplies power to the outside. For example, the battery pack 20 is assembled in a vehicle 1, and a state before use may be understood as a state of the new vehicle; a state after use should be a state after the vehicle has been driven for a distance.

In this embodiment, the second gap should refer to the minimum distance between the two first surfaces that are oppositely arranged of the two adjacent batteries 10, the distance gradually decreases as the use time of the battery increases mainly because the distance between two adjacent largest surfaces gradually decreases as the battery expands.

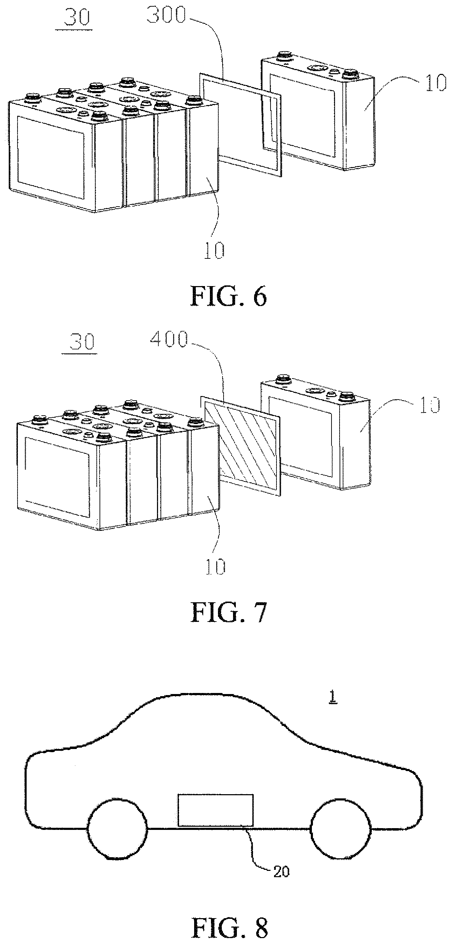

Referring to FIG. 6, the present disclosure further provides a battery module 30. The battery module 30 includes a plurality of batteries 10, and the battery 10 includes the battery case 100 according to any one of the foregoing embodiments and an electrode core 200 arranged in the battery case 100.

In some embodiments, a limiting frame 300 is included between battery cases 100 of two adjacent batteries 10. The limiting frame 300 can ensure the evenness of gaps between the batteries 10, thereby improving the uniformity of cycle performance of the batteries, and preventing an uneven force from causing a poor interface of an electrode piece of some battery and resulting in affecting electrical performance of the module and the whole pack. In the present disclosure, after the largest surface of the battery is naturally concave, a thickness of the limiting frame is reduced between the batteries to save the limiting material; the battery occupies the concave space first when expanding, and also ensures the interface quality during the cycle.

Referring to FIG. 7, in some other embodiments, a limiting structure 400 and a heat insulation material are arranged between battery cases 100 of two adjacent batteries 10, and the heat insulation material fills the limiting structure 400 or is arranged between the limiting structure 400 and the battery case 100. The heat insulation material further needs to be arranged between the batteries 10 to prevent the battery from failing in an extreme environment and then undergoing thermal diffusion. When the limiting structure 400 is a frame structure shown in FIG. 7, the heat insulation material fills a gap defined by the limiting structure 400 and a surface of the battery 10. When the limiting structure 400 is a plate-type member, the heat insulation material is arranged between the battery 10 and the limiting structure 400.

As shown in FIG. 8, the present disclosure further provides a vehicle 1, including the battery pack 20 according to any one of the foregoing embodiments or the battery module 30 according to any one of the foregoing embodiments.

Although the embodiments of the present disclosure have been shown and described, a person of ordinary skill in the art should understand that various changes, modifications, replacements, and variations may be made to the embodiments without departing from the principles and spirit of the present disclosure, and the scope of the present disclosure is as defined by the claims and their equivalents.

**Claims**

1. A battery case, comprising a plurality of side plates, wherein

    the plurality of side plates comprise two first side plates that are oppositely arranged,
    each of the two first side plates has the largest area among the plurality of side plates,
    at least one of the two first side plates comprises a first portion and a second portion surrounding the first portion,
    the first portion is a curved surface concave toward inside of the battery case, and
    a three-dimensional coordinate system is established in a first direction, a second direction, and a third direction,
    wherein the second direction is perpendicular to the two first side plates, a curvature of the first portion is less than a curvature of an ellipsoid, the curvature of the ellipsoid is obtained from an ellipsoid function, and the ellipsoid function is:

    $$((x-a)/i)^2+((y-b)/j)^2+((z-c)/k)^2=1;$$

    wherein, a, b, c, i, j, and k are determined according to coordinates of at least four points that are different from each other in the first portion, the first direction is an X direction in the three-dimensional coordinate system, the second direction is a Y direction in the three-dimensional coordinate system, the third direction is a Z direction in the three-dimensional coordinate system, and x, y, and z are coordinates of three directions of the ellipsoid function.

2. The battery case according to claim 1, wherein when two of i, j, and k are equal, a, b, c, i, j, and k are determined according to coordinates of five points that are different from each other in the first portion.

3. The battery case according to claim 1 or 2, wherein when i, j, and k are equal, the ellipsoid is a sphere, and the ellipsoid function is:

    $$(x-a)^2+(y-b)^2+(z-c)^2=R^2,$$

    wherein, a, b, c, and R are determined according to coordinates of four points that are different from each other in the first portion.

4. The battery case according to claim 3, wherein

    in each of the at least one of the two first side plates,
    a length of the first side plate in the third direction is H, and a length of the first side plate in the first direction is W;
    a distance between an edge of the first portion and an edge of the first side plate is d, and the edge of the first portion comprises a first point, a second point, a third point, and a fourth point;

    in the three-dimensional coordinate system, a coordinate of the first point is A (0 mm, 0 mm, 0 mm), a coordinate of the second point is B (0 mm, 0 mm, (-H+2d) mm), a coordinate of the third point is C ((-W+2d) mm, 0 mm, (-H+2d) mm), and a coordinate of the fourth point is D ((-W+2d) mm, 0 mm, 0 mm); and
    a, b, c, and R are determined according to coordinates of the first point, the second point, the third point, and the fourth point.

5. The battery case according to any one of claims 1 to 4, wherein a distance between an edge of the first portion and an edge of each of the at least one of the two first side plates is d, and d=5 to 20 mm.

6. The battery case according to any one of claims 1 to 5, wherein a difference in curvatures between upper and lower surfaces of each of the at least one of the two first side plates is less than 5%.

7. The battery case according to any one of claims 1 to 6, wherein an orthographic projection of the first portion on a plane defined by the first direction and the third direction is one of a square, a rectangle, a circle, or an irregular figure; and the plurality of side plates are of 3 series aluminum.

8. The battery case according to any one of claims 1 to 7, wherein the plurality of side plates further comprise two second side plates that are oppositely arranged, and the battery case is defined by the two first side plates and the two second side plates.

9. The battery case according to claim 8, wherein the battery case further comprises a bottom plate, and the bottom plate is connected to one side of the two first side plates and the two second side plates.

10. A battery comprising the battery case according to any one of claims 1 to 7 and a cover plate, wherein the second direction is a thickness direction of the battery, the cover plate and the battery case are hermetically connected to jointly define a sealed accommodating chamber, and the battery further comprises an electrode core sealed in the accommodating chamber.

11. The battery according to claim 10, wherein an air pressure of the accommodating chamber is lower than an air pressure outside the battery case.

12. The battery according to claim 11, wherein the air pressure of the accommodating chamber is -100 kPa to -5 kPa.

13. The battery according to claim 12, wherein the air pressure of the accommodating chamber is -90 kPa to -10 kPa.

14. The battery according to claim 13, wherein the air pressure of the accommodating chamber is -50 kPa to -20 kPa.

15. The battery according to any one of claims 10 to 14, wherein a thickness of each of the side plates of the battery case is 0.05 mm to 1 mm.

16. The battery according to any one of claims 10 to 15, wherein the first portions of the two first side plates that are oppositely arranged abuts against an outer surface of the electrode core, and the two first side plates that are oppositely arranged clamp the electrode core.

17. The battery according to any one of claims 10 to 16, wherein before the battery case is evacuated, a gap is provided between the electrode core and an inner surface of the battery case; and after the battery case is evacuated, the first portion is concave toward the electrode core and pressed against an outer surface of the electrode core

18. The battery according to any one of claims 10 to 17, wherein the battery comprises a plurality of electrode cores, the electrode cores are arranged along a third direction, and the third direction is a length direction of the electrode cores; and the at least one of the two first side plates comprises a plurality of first portions, and one of the first portions and one of the electrode cores are arranged correspondingly.

19. A battery pack, comprising a battery array, wherein the battery array comprises several batteries according to any one of claims 10 to 18; and the several batteries are arranged in sequence along the second direction to form the battery array.

20. A battery module, comprising a plurality of batteries, and at least one of the plurality of batteries comprises the battery case according to any one of claims 1 to 9 and an electrode core arranged in the battery case.

21. The battery module according to claim 20, wherein a limiting frame is comprised between battery cases of two adjacent batteries.

22. The battery module according to claim 20, wherein a limiting structure and a heat insulation material are arranged between battery cases of two adjacent batteries, and the heat insulation material is filled in the limiting structure or is arranged between the limiting structure and the battery case.

23. An electric vehicle, comprising the battery pack according to claim 19 or the battery module according to any one of claims 20 to 22.

FIG. 1

FIG. 2

FIG. 3

FIG. 4

FIG. 5

FIG. 6

FIG. 7

FIG. 8

## INTERNATIONAL SEARCH REPORT

| | International application No. |
|---|---|
| | **PCT/CN2021/075787** |

**A. CLASSIFICATION OF SUBJECT MATTER**

H01M 50/107(2021.01)i; H01M 10/625(2014.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; EPTXT; WOTXT; USTXT; CNKI: 电池壳, 侧板, 凹陷, 曲面, 曲率, 椭球面, battery case, side plate, recess, curved surface, curvature, ellipsoid

**C. DOCUMENTS CONSIDERED TO BE RELEVANT**

| Category* | Citation of document, with indication, where appropriate, of the relevant passages | Relevant to claim No. |
|---|---|---|
| X | US 6767667 B1 (NEC TOKIN TOCHIGI LTD.) 27 July 2004 (2004-07-27) description, column 2 line 30 to column 5 line 3, figures 1-5 | 1-10, 15, 18-23 |
| Y | US 6767667 B1 (NEC TOKIN TOCHIGI LTD.) 27 July 2004 (2004-07-27) description, column 2 line 30 to column 5 line 3, figures 1-5 | 11-14, 16-17 |
| Y | US 2015311482 A1 (SAMSUNG SDI CO., LTD.) 29 October 2015 (2015-10-29) description, paragraphs 31-72, and figures 1-5 | 11-14, 16-17 |
| X | CN 202601732 U (NISSAN MOTOR CO., LTD.) 12 December 2012 (2012-12-12) description, paragraphs 26-60, and figures 1-10 | 1-10, 15, 18-23 |
| Y | CN 202601732 U (NISSAN MOTOR CO., LTD.) 12 December 2012 (2012-12-12) description, paragraphs 26-60, and figures 1-10 | 11-14, 16-17 |
| X | CN 105140436 A (SUZHOU DEBO NEW ENERGY CO., LTD.) 09 December 2015 (2015-12-09) description, paragraphs 6-35, and figures 1-4 | 1-10, 15, 18-23 |
| Y | CN 105140436 A (SUZHOU DEBO NEW ENERGY CO., LTD.) 09 December 2015 (2015-12-09) description, paragraphs 6-35, and figures 1-4 | 11-14, 16-17 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 April 2021** | **10 May 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/075787** |

**C.      DOCUMENTS CONSIDERED TO BE RELEVANT**

| Category* | Citation of document, with indication, where appropriate, of the relevant passages | Relevant to claim No. |
|---|---|---|
| A | CN 202076336 U (WUHAN ZHONGYUAN CHANGJIANG TECHNOLOGY DEVELOPMENT CO., LTD.) 14 December 2011 (2011-12-14) entire document | 1-23 |
| A | WO 2017113099 A1 (CONTEMPORARY AMPEREX TECHNOLOGY CO., LTD.) 06 July 2017 (2017-07-06) entire document | 1-23 |

Form PCT/ISA/210 (second sheet) (January 2015)

INTERNATIONAL SEARCH REPORT
Information on patent family members

International application No.

**PCT/CN2021/075787**

| Patent document cited in search report | | | Publication date (day/month/year) | Patent family member(s) | | | Publication date (day/month/year) |
|---|---|---|---|---|---|---|---|
| US | 6767667 | B1 | 27 July 2004 | JP | 3492262 | B2 | 03 February 2004 |
| | | | | JP | 2001155693 | A | 08 June 2001 |
| | | | | KR | 20010051958 | A | 25 June 2001 |
| | | | | TW | 480761 | B | 21 March 2002 |
| US | 2015311482 | A1 | 29 October 2015 | KR | 102211526 | B1 | 02 February 2021 |
| | | | | US | 9570720 | B2 | 14 February 2017 |
| | | | | KR | 20150122463 | A | 02 November 2015 |
| CN | 202601732 | U | 12 December 2012 | JP | 2012119232 | A | 21 June 2012 |
| | | | | JP | 5625834 | B2 | 19 November 2014 |
| CN | 105140436 | A | 09 December 2015 | None | | | |
| CN | 202076336 | U | 14 December 2011 | None | | | |
| WO | 2017113099 | A1 | 06 July 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010109071